Europäisches Patentamt

(19) European Patent Office

Office européen des brevets

(11) Numéro de publication: **0 295 987**
**A1**

## (12) DEMANDE DE BREVET EUROPEEN

(21) Numéro de dépôt: **88401276.6**

(22) Date de dépôt: **25.05.88**

(51) Int. Cl.⁴: **B 21 B 37/00**
**G 01 B 11/24, G 01 B 11/04**

(30) Priorité: **29.05.87 FR 8707590**

(43) Date de publication de la demande:
**21.12.88 Bulletin 88/51**

(84) Etats contractants désignés:
**AT BE CH DE ES FR GB GR IT LI LU NL SE**

(71) Demandeur: **TKF**
**Rue du Comte Jean**
**F-59760 Grande Synthe (FR)**

(72) Inventeur: **Desrousseaux, Martine Edith**
**14, rue Paul Claudel**
**F-59229 Peteghem (FR)**

(74) Mandataire: **Bressand, Georges et al**
**c/o CABINET LAVOIX 2 Place d'Estienne d'Orves**
**F-75441 Paris Cedex 09 (FR)**

(54) Procédé et dispositif de détermination du sabre d'une tôle.

(57) Dispositif caractérisé par des moyens (5,6) de relevé de la forme de la tôle, des moyens de détermination dans celle-ci de trois portions correspondant respectivement à la tête, au corps et au pied de la tôle, des moyens de détermination dans le corps de la tôle d'une zone utile et des moyens de calcul dans la zone utile de différentes valeurs permettant de déterminer différents paramètres caractérisant le sabre (= cintrage longitudinal).

FIG.1

Bundesdruckerei Berlin

**Description**

## Procédé et dispositif de détermination du sabre d'une tôle.

La présente invention concerne un procédé de détermination du sabre d'une tôle et un dispositif pour sa mise en oeuvre.

Des impératifs économiques obligent de plus en plus les fabricants d'acier à automatiser les chaînes de production pour améliorer la rentabilité de leurs installations.

Cependant, certaines opérations, telles que notamment la fabrication de tôles ne sont pas entièrement automatisables car les formes des tôles mères, en sortie de laminoir ou de planeuse, diffèrent d'une tôle à l'autre, ce qui rend très difficile l'automatisation du reste de la chaîne de production du fait que l'on ne dispose pas d'informations précises quant à la forme de celles-ci.

Par ailleurs, il est également souhaitable de connaitre certaines caractéristiques des tôles, découlant de la forme de celles-ci, de manière à permettre par exemple un réglage du laminoir afin d'éliminer les défauts éventuels.

En effet, l'aciérie fournit à la tôlerie un demi-produit appelé brame. Un des rôles de la tôlerie est la mise à dimension du produit final, selon les spécifications du client. Cette opération se déroule en plusieurs phases :

- sur la ligne de laminage : transformation de la brame en tôle mère par laminage à chaud;

- sur la ligne de cisaillage : découpe dans la tôle mère d'une ou de plusieurs tôles filles. Cette opération se subdivise elle-même en deux parties successives:

1) dérivage de la tôle mère de façon à lui conférer la largeur demandée par le client. Cette opération est réalisée à la cisaille de rive; et

2) découpe dans la tôle mère dérivée, des tôles filles à la longueur demandée par le client. Cette opération est réalisée à la cisaille à diviser.

L'opération de cisaillage se déroule suivant cette procédure à condition que la tôle mère soit suffisamment rectangulaire pour que l'on puisse y inscrire les tôles filles. Si la tôle mère est cintrée, il arrive que l'on soit obligé d'effectuer un tronçonnage de la tôle mère avant le dérivage. Cette anomalie perturbe les flux de produits sur la ligne de cisaillage, engendre des surcoûts de fabrication et conduit parfois à rebuter du métal.

Or, il n'existe actuellement aucun moyen de mesurer industriellement le cintrage de la tôle mère dans le plan de celle-ci, cintrage qui est également généralement appelé sabre.

Une tôle mère cintrée arrive à la cisaille de rive sans que l'opérateur en soit prévenu, ce qui perturbe d'autant plus le flux de produits.

De plus, le défaut sabre est, en général, créé au laminoir lorsque celui-ci est mal réglé. Or, le lamineur n'a qu'une idée qualitative du cintrage, fondée sur son appréciation visuelle et celle du planeur. Il est donc très difficile actuellement de déterminer le réglage idéal du laminoir.

Ceci est d'autant plus vrai que le défaut sabre se voit d'autant mieux que la tôle mère est longue. On peut très bien ne pas se rendre compte d'un défaut de réglage du laminoir sur une série de tôles mères courtes et engendrer un défaut rédhibitoire à la première tôle longue.

Le but de l'invention est donc de résoudre ces problèmes en proposant un procédé et un dispositif qui permettent de caractériser le défaut sabre par des valeurs quantitatives mais qui soient simples, fiables et d'un prix de revient relativement faible.

A cet effet, l'invention a pour objet un procédé de détermination du sabre d'une tôle, caractérisé en ce qu'il comporte les étapes suivantes :

- on relève la forme de la tôle,

- on détermine dans celle-ci trois portions correspondant respectivement à la tête, au corps et au pied de la tôle,

- on détermine dans le corps de la tôle, une zone utile, et

- on calcule, dans la zone utile, différentes valeurs permettant de déterminer différentes paramètres caractérisant le sabre de la tôle.

Selon un autre aspect, l'invention a également pour objet un dispositif pour la mise en oeuvre du procédé tel que décrit précédemment.

L'invention sera mieux comprise à l'aide de la description qui va suivre, donnée uniquement à titre d'exemple et faite en se référant aux dessins annexés, sur lesquels :

- la Fig.1 représente une vue d'ensemble en perspective de moyens de relevé de la forme d'une tôle entrant dans la constitution d'un dispositif selon l'invention;

- la Fig.2 représente un schéma synoptique d'une première partie d'un dispositif selon l'invention;

- les Fig.3A,3B et 3C illustrent différentes étapes du procédé selon l'invention;

- la Fig.4 représente un schéma synoptique d'une seconde partie d'un dispositif selon l'invention;

- la Fig.5 représente un schéma synoptique illustrant le fonctionnement d'un dispositif selon l'invention; et

- la Fig.6 représente une vue en coupe d'une source lumineuse des moyens de relevé de la forme d'une tôle, entrant dans la constitution d'un dispositif selon l'invention.

Ainsi que cela sera décrit plus en détail par la suite, le procédé selon l'invention consiste à relever la forme de la tôle, à determiner dans celle-ci trois portions correspondant respectivement à la tête, au corps et au pied de la tôle, à déterminer dans le corps de la tôle, une zone utile et à calculer dans la zone utile, différentes valeurs permettant de déterminer différentes paramètres caractérisant le sabre de celle-ci.

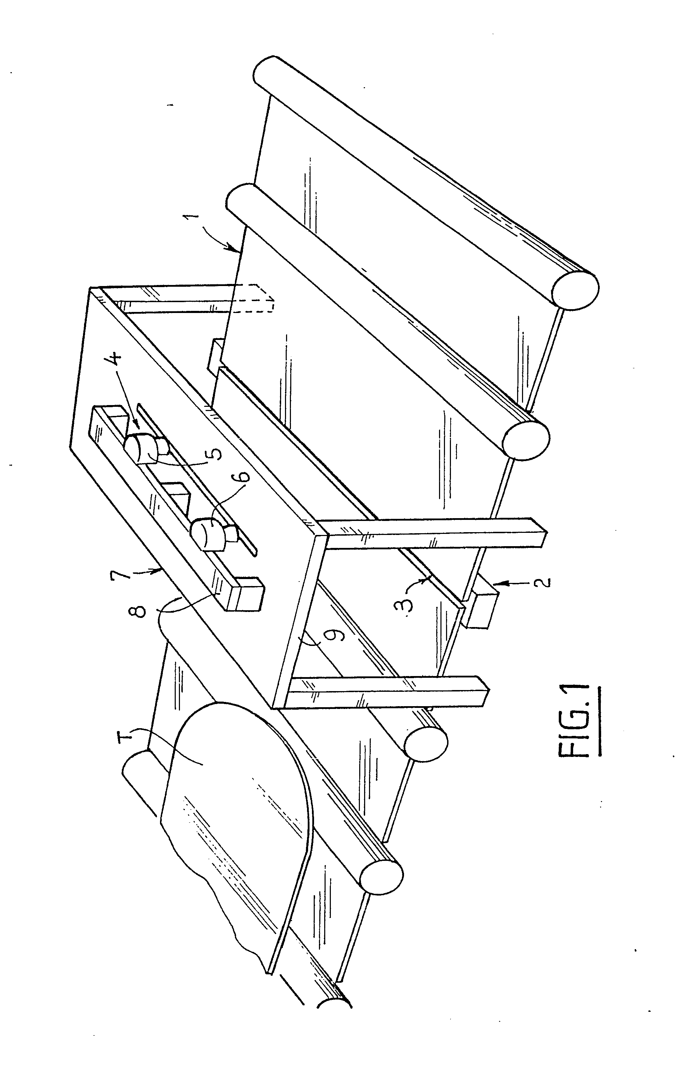

On a représenté sur la Fig.1, des moyens permettant de relever la forme de la tôle. Ces moyens, permettant de relever la forme d'une tôle T défilant sur une table à rouleaux 1 suivant l'axe longitudinal de celle-ci, par exemple en sortie de planeuse, comportent de part et d'autre de la table, une source lumineuse 2 s'étendant en regard d'un intervalle libre 3 entre deux rouleaux consécutifs de la table, et des moyens de détection 4 sensibles à la source lumineuse, disposés en regard de cette source et adaptés pour relever les portions de la source lumineuse cachées par la tôle lors de son défilement. Il est à noter que cette tôle peut être froide ou chaude (par exemple jusqu'à 1000°C) et que le relevé peut être effectué en sortie de cage de laminoir, en particulier pour tôles fortes, comme par exemple une cage Quarto.

Avantageusement, la source lumineuse 2 est disposée sous la table à rouleaux, et s'étend sur toute la largeur de celle-ci, tandis que les moyens de détection sont disposés au-dessus de celle-ci. Ces moyens de détection sont avantageusement constitués par deux caméras 5 et 6 comportant chacune un réseau linéaire de photodétecteurs et fixées de manière réglable sur des moyens de support 7 pour permettre leur calage par rapport à la table à rouleaux 1.

Avantageusement, chaque réseau linéaire est constitué par un réseau de 2048 photodiodes, à haute sensibilité, constituant les photodétecteurs. Ces caméras sont également équipées de différents dispositifs classiques tels qu'un objectif, une carte d'alimentation et une carte électronique supportant le réseau de photodétecteurs et sont disposées dans des boîtiers de protection comprenant des moyens de refroidissement, par exemple par effet VORTEX.

Ainsi qu'il est représenté sur cette figure, les moyens de support 7 comportent par exemple une poutre 8 sur laquelle sont fixés les deux boîtiers des caméras, cette poutre étant elle-même supportée par une plateforme 9 fixée sur le sol de part et d'autre de la table à rouleaux.

Ainsi qu'il a été mentionné précédemment, les boîtiers des caméras sont montés de manière réglable par tous moyens connus en soi sur la poutre 8. Ceci permet d'assurer un positionnement correct de chaque caméra en hauteur par rapport à la table à rouleaux, de rendre chaque réseau de photodétecteurs parallèle au plan de la table à rouleaux, de placer chaque réseau dans un plan perpendiculaire à l'axe de la table et de placer les deux réseaux, dans le cas où les moyens de détection comportent deux caméras, dans un même plan perpendiculaire.

Par ailleurs, il est également à noter que chaque caméra comporte des moyens de réglage connus, permettant d'assurer le positionnement précis du réseau correspondant de photodétecteurs par rapport à l'axe optique de l'objectif, notamment au niveau de la perpendicularité à l'axe optique et du centrage sur cet axe.

Ainsi que cela sera décrit plus en détail par la suite, les moyens de détection sont déclenchés à une fréquence déterminée pour obtenir par exemple des scrutations successives de toute la tôle, lors de son défilement, afin de reconstituer sa forme.

Il est à noter que ces moyens de détection sont également déclenchés en l'absence de tôle, de manière à relever des défauts éventuels de la source lumineuse, ces relevés de défauts étant utilisés pour corriger les relevés effectués lors du passage de la tôle afin d'obtenir une forme de tôle la plus correcte possible. A des fins d'exploitation industrielle, en l'absence de tôle, les moyens de détection sont déclenchés à la fréquence déterminée utilisée pour la scrutation des tôles.

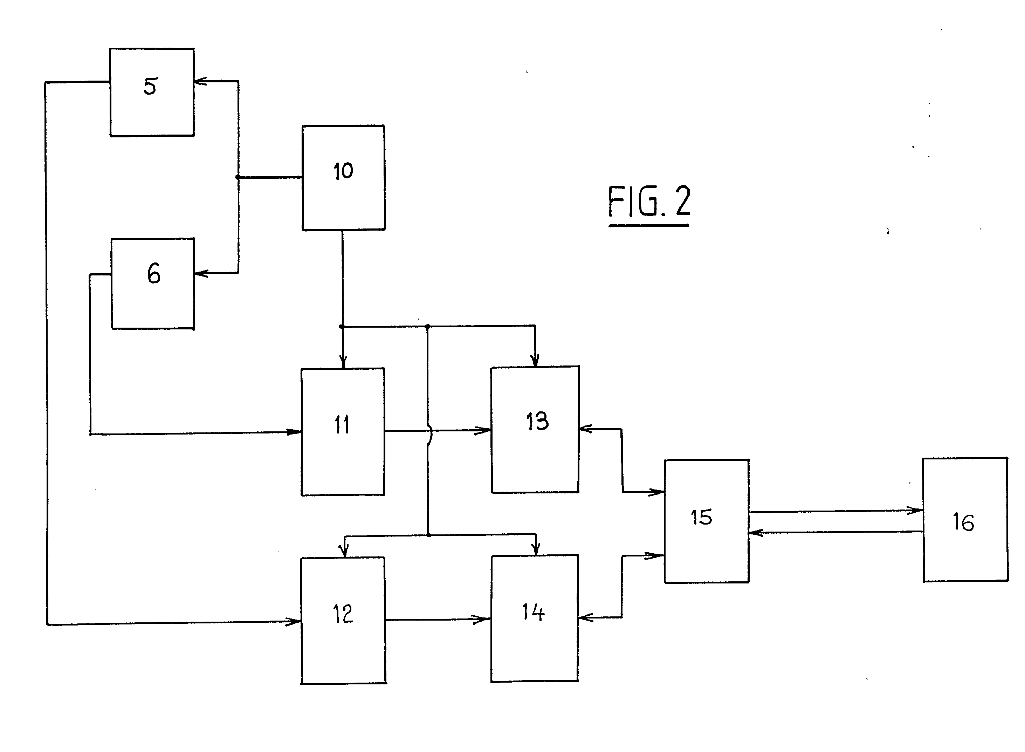

Ainsi que cela est représenté sur la Fig.2, les caméras 5 et 6 sont reliées à des moyens de déclenchement 10 constitués par exemple par toute horloge appropriée permettant de déclencher les caméras, et plus particulièrement les réseaux de photodétecteurs, à la fréquence déterminée pour obtenir les scrutations souhaitées.

Les sorties des caméras 5 et 6 sont reliées à des moyens, respectivement 11 et 12, de détection de transitions des photodétecteurs des réseaux linéaires des caméras. Ces moyens de détection de transitions 11 et 12 sont également reliés aux moyens de déclenchement 10, de même que des moyens de stockage des transitions 13 et 14 reliés respectivement à la sortie des moyens de détection de transitions 11 et 12.

Les sorties des moyens de stockage des transitions 13 et 14 sont reliées à un premier microprocesseur 15 de prétraitement électronique qui est lui-même relié à un second microprocesseur 16 d'acquisition. Les fonctions de ces microprocesseurs seront dé-crites plus en détail par la suite.

Les moyens de déclenchement 10 activent les moyens de détection, par exemple toutes les dix millisecondes de manière à réaliser une analyse de toute la tôle et, à chaque scrutation, les sorties des réseaux de photodétecteurs sont comparées à un seuil asservi sur le niveau maximum des signaux de sortie des photodétecteurs, de la scrutation précédente, et obligatoirement supérieur à un seuil minimal. Les moyens de détection de transitions 11, 12 comparent alors les signaux de sortie des photodétecteurs de la scrutation en cours, à ce seuil, et lorsque les signaux basculent par rapport à ce seuil, une transition est détectée. Le numéro du photodétecteur correspondant à cette transition est alors disponible dans un compteur de diodes des moyens de détection de transitions de même que le sens de la transition qui est élaboré à partir de la variation de détection.

Les transitions sont alors mémorisées dans les moyens de stockage 13 et 14 constitués par exemple par des mémoires de type premier entré/premier sorti, de manière à permettre au microprocesseur 15 de venir lire ces transitions dans ces moyens de stockage sous la commande du microprocesseur d'acquisition 16. Les transitions acquises par les deux caméras, pendant la scrutation durant laquelle a eu lieu la demande sont alors lues et le microprocesseur de prétraitement 15 transmet les transitions avec les numéros des photo détecteurs correspondants et leur sens au microprocesseur d'acquisition 16 par exemple suivant un protocole de liaison parallèle.

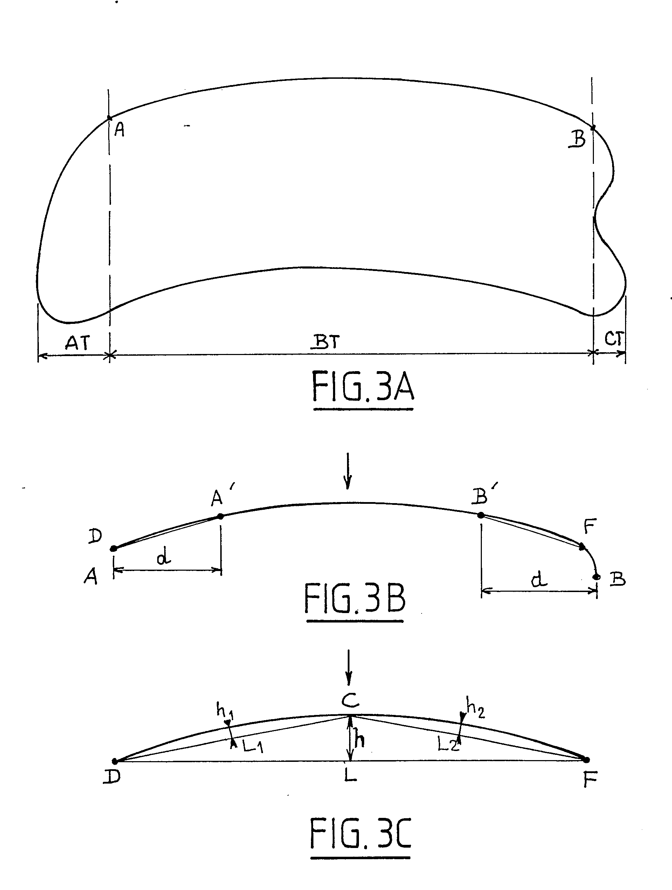

Les paramètres représentatifs du sabre de la tôle sont calculés sur la fibre médiane de celle-ci. Cette tôle peut avoir un profil perturbé par des dé-fauts d'extrémité qu'il y a lieu d'éliminer. Ceci est effectué dans un premier temps en découpant la tôle en trois zones (Fig.3A), à savoir une tête référence AT sur cette figure, un corps BT et un pied CT à partir de critères décrits ci-dessous qui s'appliquent itérativement à partir de la première scrutation.

Ainsi, si la scrutation i comporte par exemple plus de quatre transitions, où si la différence de portions de source lumineuse cachées par la tôle entre deux scrutations prédéterminées i et i-j, est supérieure à un seuil déterminé, la portion de la tôle sur laquelle a été opérée la scrutation i appartient à la tête AT de la tôle. Il est à noter que j est un paramètre fixé par l'utilisateur et peut être égal à 1. Cette même comparaison est reprise pour les scrutations suivantes.

Dans le cas où la différence de portions de source lumineuse cachées par la tôle entre deux scrutations prédéterminées est inférieure au seuil déterminé, la portion de la tôle correspondant à cette scrutation appartient au corps BT de la tôle.

La scrutation de la tôle se poursuivant, si la scrutation i comporte par exemple plus de quatre transitions ou si la différence de portions de source lumineuse cachées par la tôle entre les deux scrutations prédéterminées est supérieure au seuil déterminé, la portion de la tôle correspondant à la scrutation i ainsi que les scrutations suivantes appartien nent au pied CT de la tôle.

Il est à noter que ce traitement est effectué en temps réel au fur et à mesure de l'acquisition des scrutations, par le microprocesseur d'acquisition 16.

Il est ensuite procédé à une recherche, dans le corps BT de la tôle, d'une zone utile pour le calcul du sabre. Ceci ne peut être effectué qu'en temps différé une fois que des zones de recherche, qui seront décrites plus en détail par la suite ont été acquises. A chaque extrémité du corps de la tôle, les perturbations restantes du profil de la fibre médiane sont éliminées en appliquant l'algorithme suivant .

On détermine tout d'abord dans le corps de la tôle, des zones de recherche AA', BB' (Fig.3B) en partant des points A et B d'extrémité du corps BT de la tôle et en déterminant des points A' et B' sur la fibre médiane de celle-ci à une distance d des points d'extrémités A,B. Cette distance d est un paramètre fixé au préalable et peut être réglé à volonté par les utilisateurs.

Le début de la zone utile est un point D tel que pour tout point M compris entre A' et D, la flèche par rapport à la corde tendue entre A' et M est inférieure à un seuil déterminé et que pour tout point M compris entre D et A, la flèche par rapport à la corde tendue entre A' et M est supérieure à ce même seuil.

Le même algorithme est appliqué pour déterminer la fin de la zone utile et obtenir le point F (Fig.3B). La fibre médiane est ensuite redressée de manière à rendre la corde D, F parallèle à l'axe de la table à rouleaux. Il est alors possible de calculer différentes valeurs dans cette zone utile, ces différentes valeurs permettant de déterminer différents paramètres caractérisant le sabre de la tôle.

Ainsi, comme cela est représenté sur la Fig.3C, une corde principale L est tendue et déterminée entre D et F qui sont les points d'extrémité de la zone utile. La flèche maximale h est déterminée entre la fibre médiane de la tôle et la corde L et cette flèche détermine deux cordes secondaires $L_1$ et $L_2$ respectivement entre les points D,C et C,F, C étant le point de la fibre médiane de la tôle où la flèche h est maximale. On calcule également d'une part h1 qui est la flèche maximale entgre la fibre médiane de la tôle et la corde de longueur L1 entre D et C et d'autre part une flèche h2 qui est la flèche maximale entre la fibre médiane de la tôle et la corde de longueur L2 tendue entre C et F.

Il est alors possible à partir de ces valeurs de déterminer certains paramètres du sabre qui peuvent être constitués par exemple par les valeurs h, L, h1, L1, h2, L2 et $h/L^2$, $h1/L1^2$ et $h2/L2^2$ qui sont représentatives des courbures de la tôle. Il est à noter que ces critères peuvent être facilement modifiés.

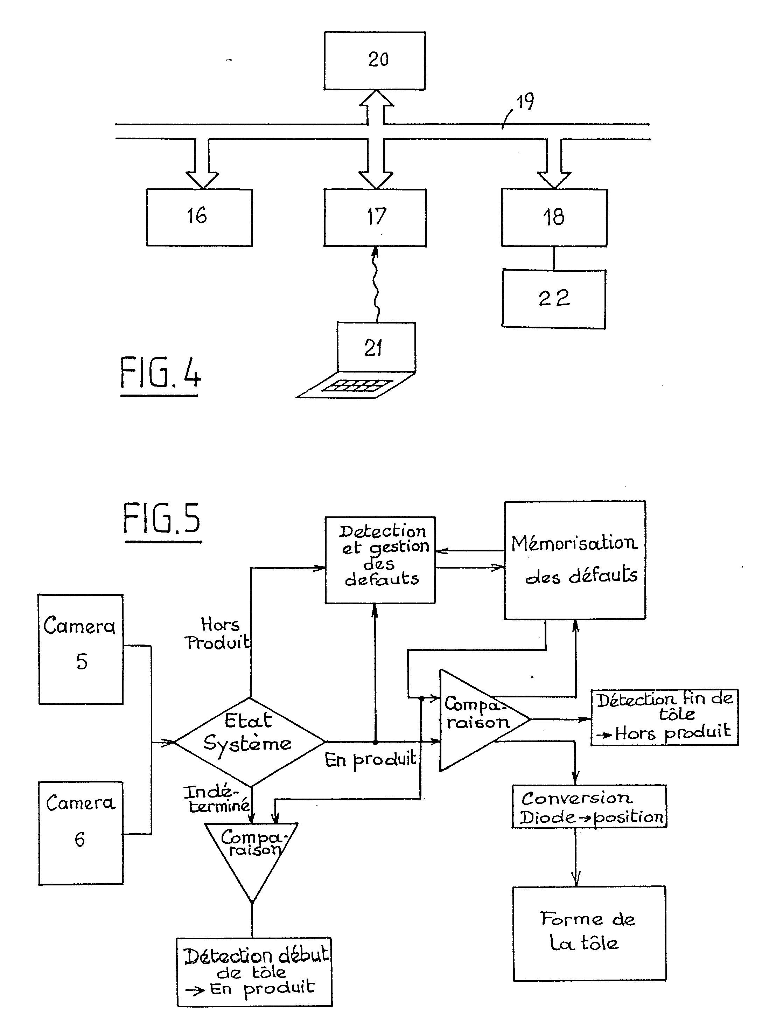

Ce traitement est effectué par trois microprocesseurs 16, 17 et 18 (Fig.4) travaillant simultanément et connectés sur un même bus 19. Les informations sont échangées à travers une mémoire partagée 20 également reliée au bus 19.

Dans la description qui va suivre, les trois microprocesseurs ont été appelés respectivement le microprocesseur d'acquisition 16 déjà décrit précédemment, un microprocesseur de calcul 17 et un microprocesseur de protocole 18.

Les principales fonctions du microprocesseur d'acquisition 16 sont :

- la gestion du mode d'acquisition, de l'état du système de mesure, du numéro de passe, de l'abandon d'une mesure,

- l'acquisition des transitions par dialogue avec le microprocesseur 15 de prétraitement et les composants associés à celui-ci, tels que ceux décrits en regard de la Fig.2,

- l'interprétation des transitions acquises en tant que défauts de la source ou bord de tôle en fonction de l'état du système de mesure,

- en présence de produit, détermination au fur et à mesure de l'acquisition, des zones correspondant à la tête, au corps et au pied de la tôle, et

- le calcul de la position des bords de la tôle avec une correction de la parallaxe due à l'épaisseur de celle-ci, en effectuant une conversion transition de photodiode en mm à l'aide de constantes d'étalonnage calculées par le microprocesseur de calcul 17.

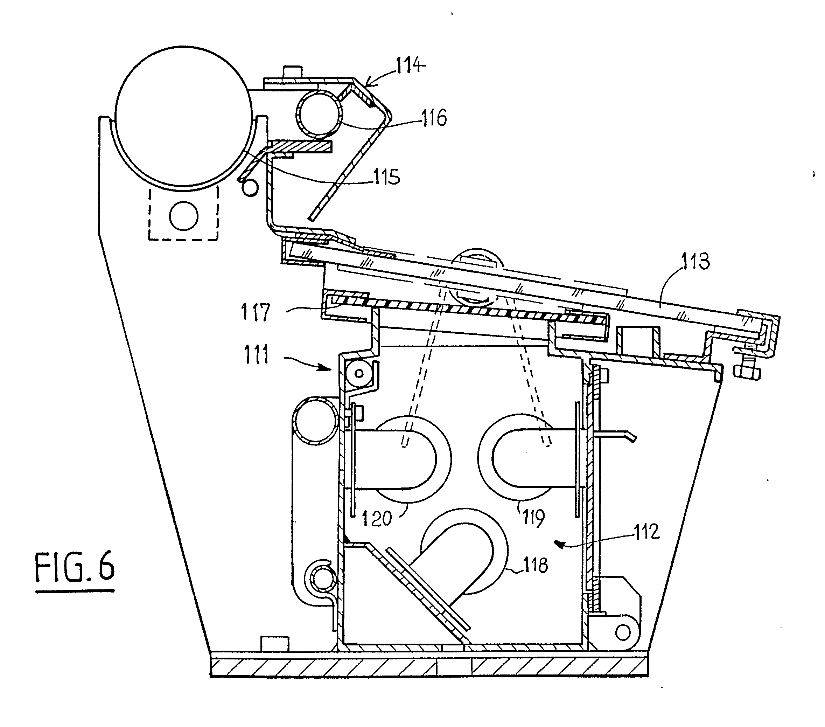

Ainsi, que cela est illustré sur la Fig.5, au repos, lorsqu'il n'y a pas de produit en cours de planage, ou à l'entrée de la planeuse, l'état du système est "hors produit". Dans ce cas, le mode d'acquisition est dit "automatique", c'est à dire que périodiquement, une acquisition des transitions est réalisée. Etant hors produit, toute transition détectée est analysée comme un défaut de la source lumineuse. Les transitions détectées sont donc représentatives soit d'un défaut déjà répertorié qui est donc confirmé, soit d'un défaut qui vient d'apparaître et qui sera validé s'il est détecté pendant n scrutations successives.

Un défaut validé qui n'est plus détecté pendant n scrutations successives est éliminé.

A l'apparition d'un produit à l'entrée de la planeuse, l'état jauge devient "indéterminé" et le mode d'acquisition "synchronisé" sur la vitesse de la planeuse.

C'est ainsi qu'à chaque fois que les rouleaux de la planeuse tournent par exemple de 50 mm, une acquisition des transitions est réalisée. A la première acquisition telle qu'il existe une transition détectée qui ne corresponde pas à un défaut répertorié, le début de la tôle est détecté. L'état du système devient alors "en produit". La gestion des défauts précédemment décrite reprend alors et uniquement pour des défauts qui se situeraient hors du gabarit de la tôle, c'est à dire sa largeur plus une marge de sécurité. Etant "en produit", la détermination en temps réel des zones tête- corps-pied de la tôle est effectuée.

Par le microprocesseur 16 d'acquisition, la transition d'un bord de tôle au voisinage d'un défaut pendant n scrutations consécutives provoque l'abandon de la mesure. Le passage en marche arrière provoque également cet abandon.

A la première acquisition telle qu'il n'existe aucune transition détectée qui ne corresponde pas à un défaut repertorié, la fin de la tôle est détectée. Le système revient alors dans l'état "hors produit" et en mode d'acquisition "automatique".

Des contrôles de validité de la mesure sont effectués au niveau de la cohérence des sens de transition, de la vérification de la concordance des détections effectuées par les deux caméras dans la zone de recouvrement des champs couverts, de la dimension de la tête ou du pied de la tôle et de la surveillance de la liaison entre les différents éléments.

Les fonctions principales du microprocesseur de calcul 17 (Fig.4) sont les suivantes :

- calculer la fibre médiane, déterminer la zone utile de la tôle et les paramètres du sabre,

- permettre le dialogue en local à travers un clavier et une console 21, et

- l'étalonnage.

Lorsque le microprocesseur d'acquisition 16 a détecté le début du corps de la tôle, l'information est transmise au microprocesseur de calcul 17 qui effectue alors en temps réel le calcul de la fibre médiane à partir des positions des rives élaborées par le microprocesseur d'acquisition 16. La détermination du début de la zone utile est lancée sur A, A', dès que la fibre médiane a été calculée sur cette portion de tôle. Lorsque le calcul de la fibre médiane est terminé pour tout le corps du produit, le microprocesseur de calcul 17 recherche la fin de la zone utile dans B,B' puis calcule les différents paramètres du sabre toutefois après avoir, comme cela a été mentionné précédemment, redressé la fibre médiane en rendant la corde DF parallèle à l'axe de la table à rouleaux.

Afin de faciliter la mise au point sur site de l'appareil de mesure, des moyens de dialogue comme par exemple le clavier et la console 21 peuvent être mis en oeuvre pour réaliser les fonctions suivantes :

- modification des paramètres utilisés dans les algorithmes de calcul du sabre, dans les critères de traitement des défauts ou d'abandon,

- listage des transitions détectées pour chaque caméra, des positions des rives,

- tracé des fibres médianes, des rives en semi-graphique,

- simulation totale du passage d'une tôle,

- lancement de n acquisitions et surveillance du dialogue entre les différents microprocesseurs,

- accès à toute information mémoire,

- étalonnage.

Les buts de cet étalonnage sont de déterminer automatiquement :

- les gains (mm/photodétecteur) de chaque caméra et leur position relative, ceci afin de permettre le calcul des positions des rives,

- le numéro des diodes se trouvant sur l'axe optique, ceci afin de permettre le choix du mode de correction de parallaxe.

Le microprocesseur de protocole 18 (Fig.4) permet quant à lui :

- de gérer la liaison série avec un calculateur central 22 de l'unité de production,

- de demander à l'apparition d'une tôle à l'entrée de la planeuse par exemple à un calculateur central de l'unité de production, les paramètres de cette tôle, notamment son numéro, sa largeur, sa longueur, son épaisseur,

- l'émission en temps réel et par messages successifs de la fibre médiane,

- l'émission des paramètres du sabre ou d'un message d'abandon, et éventuellement l'émission des formes de la tête, du pied et du corps de la tôle.

L'exploitation des différents paramètres caractérisant le sabre peut être axée sur trois objectifs :

1) régler le laminoir afin d'éliminer les défauts sur les tôles mères à venir. Ainsi après avoir détecté une tôle cintrée, le lamineur doit prendre des mesures adéquates sur les produits suivants. Pour l'aider dans cette tache, il peut disposer d'un support visuel sur écran, se présentant sous la forme d'un résultat détaillé de la mesure de la tôle précédente et par exemple d'un historique restreint des dix derniers produits laminés, de façon à bien ap-préhender les dérives et les évolutions. Une deuxième phase plus active, consiste à effectuer un contrôle statistique du procédé, géré par calculateur. Celui-ci pourra alors alarmer le lamineur quand le sabre devient trop important et lui indiquer les corrections à effectuer sur le réglage du laminoir.

2) informer le parachèvement. Ceci lui permet de savoir rapidement quelle conduite il y a lieu de tenir en cas de sabre. Pour cela, un calculateur, alimenté par les mesures effectuées par le dispositif peut tester l'inscriptibilité des tôles filles dans les tôles mères, décider des éventuelles sorties de ligne et dans ce cas, déterminer la marche à suivre. En effet, il faut faire en sorte que la tôle suive systématiquement le même circuit, un défaut sabre bouleversant totalement le circuit de la tôle et donc l'organisation de l'atelier bien que celui-ci soit totalement automatisé. Un tel traitement doit être effectué avant que la tôle mère n'arrive au parachèvement pour permettre d'anticiper et de prendre ces dispositions.

3) rattraper le sabre à la planeuse. Il est possible sous certaines conditions d'éliminer le défaut sabre à la planeuse. L'établissement de consignes de planage nécessite les informations du dispositif selon l'invention.

Ainsi, il apparaît que le dispositif selon l'invention constitue un outil dont l'utilisation re couvre l'adaptation des réglages du laminoir, la gestion rapide et sans surprise des tôles cintrées au parachèvement et enfin le rattrapage direct du défaut.

Si l'on se reporte maintenant à la Fig.6 qui représente une vue en coupe d'une source lumineuse, on constate que celle-ci comprend un boîtier 111 comportant des moyens connus de refroidissement, par exemple par effet VORTEX comme pour les boîtiers de caméra mentionnés précédemment. Dans ce boîtier 111 sont disposés des moyens lumineux 112 et le couvercle du boîtier comprend au moins une plaque 113 de matériau transparent résistant en température, ce dispositif permettant de relever le contour par exemple de tôles froides ou chaudes pouvant atteindre 1000°C. Cette plaque 113 est inclinée en direction d'un bord longitudinal du boîtier et des moyens 114 d'amenée d'eau de refroidissement et de nettoyage de ladite plaque sont prévus sur le bord supérieur de celle-ci.

Les moyens 114 d'amenée d'eau comprennent des tubes 115 et 116 s'étendant le long du bord supérieur de ladite plaque et comportant des trous régulièrement répartis suivant leur longueur.

Une plaque 117 de matériau diffusant la lumière est interposée, dans le boîtier, entre les moyens lumineux 112 et la plaque de matériau transparent 113.

Les moyens lumineux 112 sont avantageusement constitués par trois rangées 118, 119 et 120 de tubes fluorescents, disposées à peu près à 120° les unes par rapport aux autres dans le boîtier. Par ailleurs, les tubes fluorescents de chacune des rangées sont décalés longitudinalement par rapport à ceux des autres rangées de manière à compenser les pertes de lumière aux extrémités des tubes et à éclairer toute la hauteur des photo-détecteurs. Ceci permet d'obtenir un éclairage relativement uniforme sur une longueur pouvant aller jusqu'à six mètres pour certaines tables à rouleaux. Par ailleurs, l'utilisation de la plaque 117 de matériau diffusant la lumière, par exemple en PLEXIGLAS, permet d'homogénéiser celle-ci. La plaque de matériau 113 résistant en température est quant à elle constituée par exemple de verre.

L'écoulement d'eau à partir des tubes 115 et 116 sur la plaque 113 permet d'une part de refroidir celle-ci, notamment lors du passage de tôles chaudes au voisinage de la source lumineuse et d'autre part d'évacuer des impuretés, telles que par exemple de la calamine, qui pourraient tomber sur cette plaque et diminuer ainsi la qualité de la source lumineuse.

Il est également à noter que ce boîtier peut être monté déplaçable transversalement par rapport à la table à rouleaux de manière à la dégager de celle-ci et permettre une maintenance plus facile de la source lumineuse.

Avantageusement, les tubes fluorescents émettent sur une longueur d'onde donnée par exemple dans le vert et les caméras comportent un filtre sélectif centré sur cette même longueur d'onde, ce qui permet d'assurer un contraste source-tôle suffisant pour des températures de tôles élevées et de rendre ce contraste insensible aux variations de la lumière ambiante. Par ailleurs, les tubes sont excités à haute fréquence de manière à permettre l'utilisation d'un temps d'exposition des photo-détecteurs relativement faible.

## Revendications

1. Procédé de détermination du sabre d'une tôle (T), caractérisé en ce qu'il comporte les étapes suivantes :
- on relève la forme de la tôle (T),
- on détermine dans celle-ci trois portions correspondant respectivement à la tête (AT), au corps (BT) et au pied (CT) de la tôle,
- on détermine, dans le corps (BT) de la tôle, une zone utile (D,F), et
- on calcule, dans la zone utile, différentes valeurs (L, h, $L_1$, $h_1$, $L_2$, $h_2$) permettant de déterminer différents paramètres caractérisant le sabre.

2. Procédé selon la revendication 1, caractérisé en ce qu'on fait défiler la tôle (T) sur des moyens de transport (1), entre une source lumineuse (2) s'étendant sur toute la largeur des moyens de transport et des moyens de détection (5,6) de portions de source lumineuse (2) cachées par la tôle lors de son défilement, disposés au-dessus et au-dessous des moyens de transport (1) et en ce qu'on déclenche des moyens de détection (5,6) à une fréquence déterminée pour obtenir des scrutations successives de la tôle afin de reconstituer sa forme.

3. Procédé selon la revendication 2, caractérisé en ce qu'on détermine la différence de portions de source lumineuse cachées par la tôle (T) entre deux scrutations prédéterminées et on compare cette différence avec un seuil déterminé pour délimiter le corps (BT) de la tête (AT) et du pied (CT) de la tôle (T).

4. Procédé selon l'une quelconque des revendications 1 à 3, caractérisé en ce qu'on détermine le nombre de portions de source lumineuse cachées par la tôle à chaque scrutation et en ce qu'on compare ce nombre à un seuil déterminé pour délimiter le corps (BT) de la tête (AT) et du pied (CT) de la tôle (T).

5. Procédé selon la revendication 3 ou 4, caractérisé en ce qu'on délimite à chaque extrémité du corps (BT) de la tôle (T), une zone de recherche (A,A′, B,B′) entre un premier point (A,B) correspondant à l'extrémité du corps (BT) de la tôle et un second point (A′B′) situé à une distance (d) déterminée du premier point, et dans laquelle on détermine un point d'extrémité (D,F) de la zone utile, telle que pour tout point (M) situé entre le second point (A',B') et le point d'extrémité (D,F) de la zone utile de la tôle, la flèche entre la fibre médiane de la tôle et une corde tendue entre le second point (A',B') et le point (M) est inférieure à un seuil déterminé, et que pour tout point (M) situé entre le premier point (A,B) et le point d'extrémité (D,F) de la zone utile de la tôle, la flèche entre la fibre médiane de la tôle et une corde tendue entre le second point-(A', B') et le point (M), est supérieure audit seuil déterminé.

6. Procédé selon la revendication 5, caractérisé en ce qu'on calcule la longueur (L) d'une corde principale séparant les deux points d'extrémité (D,F) de la zone utile, la flèche maximale (h) entre cette corde et la fibre médiane de la tôle (T), des cordes secondaires (L1,L2) entre les deux extrémités (D,F) de la zone utile et le point (C) de la fibre médiane de la tôle où la flèche (h) est maximale et les flèches maximales (h1, h2) entre les cordes secondaires ( L1, L2) et la fibre médiane de la tôle.

7. Procédé selon l'une quelconque des revendications 2 à 6, caractérisé en ce qu'on déclenche les moyens de détection (5,6) en l'absence de tôle (T) de manière à relever des défauts éventuels de la source lumineuse (2) et en ce qu'on utilise ce relevé de défauts pour corriger le relevé de la forme de la tôle (T).

8. Dispositif pour la mise en oeuvre du procédé selon l'une quelconque des revendications précédentes, caractérisé en ce qu'il comporte des moyens (1,2, 5,6, 10,11,12,13,14,15) de relevé de la forme de la tôle, des moyens (16) de détermination dans celle-ci de trois portions correspondant respectivement à la tête (AT), au corps (BT) et au pied (CT) de la tôle (T), des moyens de détermination (17) dans le corps (BT) de la tôle d'une zone utile et des moyens de calcul (17) dans la zone utile, de différentes valeurs permettant de déterminer différentes paramètres caractérisant le sabre.

9. Dispositif selon la revendication 8, caractérisé en ce que les moyens de relevé de la forme de la tôle comprennent des moyens de transport (1), une source lumineuse (2) s'étendant sur toute la largeur des moyens de transport et des moyens de détection (5,6) des portions de source lumineuse cachées par la tôle (T) lors de son défilement et des moyens de déclenchement (10) à une fréquence déterminée des moyens de détection (5,6) pour obtenir des scrutations successives de la tôle.

10. Dispositif selon la revendication 9, caractérisé en ce que les moyens de détection comprennent au moins une caméra (5,6) comportant un réseau linéaire de photodétecteurs.

11. Dispositif selon la revendication 10, caractérisé en ce que les moyens de relevé comprennent des moyens de détection (11,12) et des moyens de stockage (13,14) des transitions des photodétecteurs en gendrées par le passage de la tôle (T) entre la source lumineuse (2) et les photodétecteurs des caméras (5, 6).

12. Dispositif selon l'une quelconque des revendications 8 à 11, caractérisé en ce que les moyens (16) de détermination dans la tôle des trois portions correspondant respectivement à la tête (AT), au corps (BT) et au pied (CT) de celle-ci comprennent des moyens de calcul de la différence de portions de source lumineuse cachées par la tôle entre deux scrutations prédéterminées et des moyens de comparaison de cette différence avec un seuil déterminé, les portions de tôle correspondant à des scrutations dont la différence de portions cachées est supérieure audit seuil déterminé, appartenant à la tête (AT) ou au pied (CT) de la tôle.

13. Dispositif selon l'une quelconque des revendications 8 à 12, caractérisé en ce qu'il comporte des moyens de calcul du nombre de transitions de chaque scrutation et des moyens de comparaison de ce nombre avec un seuil prédéterminé pour déterminer si la portion de la tôle sur laquelle a eu lieu la scrutation, appartient ou non au corps (BT) de la tôle (T).

14. Dispositif selon la revendication 13, caractérisé en ce que ledit seuil est de quatre transitions.

15. Dispositif selon la revendication 12, 13 ou 14, caractérisé en ce que les moyens de calcul comprennent un ensemble à microprocesseur (16).

16. Dispositif selon l'une quelconque des revendications 8 à 15, caractérisé en ce que les moyens (17) de détermination de la zone utile comprennent des moyens de délimitation à chaque extrémité du corps (BT) de la tôle d'une zone de recherche (A-A', B-B') entre un premier point (A,B) correspondant à l'extrémité du corps (BT) de la tôle et un second point (A',B') situé à une distance (d) déterminée du premier point (A,B) et des moyens de détermination dans cette zone de recherche, d'un point d'extrémité (D,F) de la zone utile, tel que pour tout point (M) situé entre le second point ( A',B') et le point d'extrémité (D,F) de la zone utile de la tôle, la flèche entre la fibre médiane de la tôle et une corde tendue entre le second point (A',B') et le point (M), est inférieure à un seuil déterminé et que pour tout point (M) situé entre le premier point (A,B) et le point d'extrémité (D,F) de la zone utile de la tôle, la flèche entre la fibre médiane de la tôle et une corde tendue entre le second point (A',B') et le point (M), est supérieure audit seuil déterminé.

17. Dispositif selon la revendication 16, caractérisé en ce que lesdits moyens de détermination comprennent un ensemble à microprocesseur (17).

18. Dispositif selon l'une quelconque des revendications 8 à 17, caractérisé en ce qu'il comporte des moyens de calcul (17) de la longueur d'une corde principale (L) séparant les deux points d'extrémité (D,F) de la zone utile, de la flèche maximale (h) entre cette corde et la fibre médiane de la tôle (T), de cordes secondaires (L1,L2) entre les extrémités (D,F) de la zone utile et le point (C) de la fibre médiane de la tôle où la flèche (h) est maximale et de flèches maximales (h1, h2) entre les cordes secondaires (L1, L2) et la fibre médiane de la tôle.

19. Dispositif selon la revendication 18, caractérisé en ce que lesdits moyens de calcul comprennent un ensemble à microprocesseur (17).

20. Dispositif selon l'une quelconque des revendications 8 à 19, caractérisé en ce qu'il comporte des moyens de déclenchement à une fréquence déterminée des moyens de détection (5,6) en l'absence de tôle, de manière à relever des défauts éventuels de la source lumineuse (2) et des moyens de correction du relevé de la forme de la tôle (T) avec les défauts éventuels.

21. Dispositif selon la revendication 20, caractérisé en ce que lesdits moyens de déclenchement et lesdits moyens de correction comprennent un ensemble à microprocesseur (17).

22. Dispositif selon l'une quelconque des revendications 8 à 21, caractérisé en ce qu'il comporte un ensemble à microprocesseur de protocole (18), relié aux autres ensembles à microprocesseur (16,17) et à un ordinateur central (22) de l'unité de production.

23. Dispositif selon l'une quelconque des revendications 9 à 22, caractérisé en ce que ladite source lumineuse (2) est disposée sous la table à rouleaux (1) et les moyens de détection (5,6), au-dessus de celle-ci.

24. Dispositif selon la revendication 23, caractérisé en ce que ladite source lumineuse (2) comprend un boîtier (111) comportant des moyens de refroidissement, et dans lequel sont disposés des moyens lumineux (112), et dont le couvercle comprend au moins une plaque (113) de matériau transparent résistant en température, inclinée en direction d'un bord longitudinal du boîtier (111), des moyens (114) d'amenée d'eau de refroidissement et de nettoyage de ladite plaque étant prévus sur le bord supérieur de celle-ci.

25. Dispositif selon la revendication 24, caractérisé en ce que les moyens d'amenée d'eau comprennent au moins un tube (115,116) s'étendant le long du bord supérieur de ladite plaque et comportant des trous régulièrement répartis suivant sa longueur.

26. Dispositif selon la revendication 24 ou 25, caractérisé en ce qu'une plaque (117) de matériau diffusant la lumière est interposée dans le boîtier, entre les moyens lumineux (112) et la plaque de matériau transparent (113).

27. Dispositif selon l'une quelconque des revendications 24 à 26, caractérisé en ce que les moyens lumineux (112) comprennent des tubes fluorescents émettant sur une longueur d'onde donnée.

28. Dispositif selon la revendication 27, caractérisé en ce que lesdits moyens lumineux comprennent trois rangées (118,119,120) de tubes fluorescents disposées à peu près à 120° les unes par rapport aux autres.

29. Dispositif selon la revendication 28, caractérisé en ce que les tubes fluorescents de chacune des rangées (118,119,120) sont décalés longitudinalement par rapport à ceux des autres rangées.

30. Dispositif selon la revendication 27, 28 ou 29, caractérisé en ce que les tubes fluorescents émettent dans le vert.

31. Dispositif selon la revendication 30, caractérisé en ce que ladite au moins une caméra (5,6) comprend un filtre sélectif centré sur la longueur d'onde donnée d'émission des tubes fluorescents.

0295987

FIG.1

FIG.2

0295987

FIG.3A

FIG.3B

FIG.3C

0295987

FIG.4

FIG.5

FIG.6